**Europäisches Patentamt**

**European Patent Office**

**Office européen des brevets**

(19)

(11) Veröffentlichungsnummer: **0 085 924**
**B1**

(12)

# EUROPÄISCHE PATENTSCHRIFT

(45) Veröffentlichungstag der Patentschrift:
20.04.88

(51) Int. Cl.⁴: **G 01 C 9/06**

(21) Anmeldenummer: **83100872.7**

(22) Anmeldetag: **31.01.83**

(54) **Messgerät, insbesondere zum Messen der Fahrbahnneigung in Längs- und Querrichtung.**

(30) Priorität: **05.02.82 HU 35582**

(43) Veröffentlichungstag der Anmeldung:
**17.08.83 Patentblatt 83/33**

(45) Bekanntmachung des Hinweises auf die Patenterteilung:
**20.04.88 Patentblatt 88/16**

(84) Benannte Vertragsstaaten:
**AT BE CH DE FR GB IT LI LU NL SE**

(56) Entgegenhaltungen:
**US - A - 3 797 124**
**US - A - 4 083 237**

(73) Patentinhaber: **Agroinnovácios Közös Vállalat, Ady E.
ut 6-8, Szolnok (HU)**

(72) Erfinder: **Sztanek, Tamas, Dipl.-Ing., Mikszáth K. u. 3,
H-8000 Székesfehérvár (HU)**
Erfinder: **Kaviák, László, Dipl.-Ing., Pintér K. 1tp. 6,
H-8000 Székesfehérvár (HU)**
Erfinder: **Pertz, Ferenc, Népköztársaság u. 21,
H-8000 Székesfehérvár (HU)**
Erfinder: **Velencei, László, Dipl.-Ing., József A. u. 56,
H-8000 Székesfehérvár (HU)**

(74) Vertreter: **Patentanwälte Viering & Jentschura,
Steinsdorfstrasse 6, D-8000 München 22 (DE)**

**Beschreibung**

Gegenstand der Erfindung ist ein Neigungsmessgerät mit den im Oberbegriff des Anspruchs 1 aufgeführten Merkmalen, das insbesondere zum Messen der Fahrbahnneigung in Längs- und Querrichtung, der Neigung der Fahrbahnkurven, aber daneben auch zum Abmessen von Gleisen, Halterungsgerüsten, Plätzen, Kunstgegenständen oder für das Abmessen von Paneelen bei der Montage verwendbar ist.

Ein derartiges Messgerät ist aus der US-A-3 797 124 bekannt.

Momentan erfolgt die Bestimmung der Neigungsverhältnisse von Strassen, Bahnlinien, Plätzen und Kunstgegenständen mittels Nivellierung. Dazu machen zwei, drei Personen Längenmessungen mit einem Messband, anschliessend bestimmen zwei Personen mit Hilfe eines optischen Gerätes den Niveauunterschied der Messpunkte der gemessenen Entfernung durch Messreihen. Aus diesen Daten wird durch Rechnung der Abfall oder Anstieg in Prozent bestimmt. Die Nivellierung besteht also aus einer Datenaufnahme an Ort und Stelle und einer Datenverarbeitung im Büro. In den letzten Jahren sind zwar Vorschläge zur Vervollkommnung der optischen Geräte gemacht worden, z.B. Lasertechnik, hinsichtlich der gesamten Neigungsmessung wird aber auch weiterhin die zeitaufwendige und eine grosse Anzahl an Personen beanspruchende, unfallgefährliche Arbeit durchgeführt.

Es wären z.B. bei einer in bestimmten Zeitabständen erfolgenden Untersuchung bzw. Kontrolle der Fahrbahnen aus der Sicht der Verkehrstechnik, z.B. entsprechend der internationalen Vorschriften von T.I.R., innerhalb verhältnismässig kurzer Zeitabstände eine grosse Anzahl von Messungen erforderlich, was mit den bisher bekannten Methoden jedoch kaum durchzuführen ist.

Aus der Druckschrift US-A-4 083 237 ist ein Wegaufnehmer bekannt, der einen Differential-Transformator verwendet. Dieser Differential-Transformator besteht aus zwei jeweils eine Primär- und Sekundärwicklung sowie eine Hilfs-Sekundärwicklung aufweisenden Transformatoren.

Durch die im Anspruch 1 angegebene Erfindung wird die Aufgabe gelöst, ein weiteres Neigungsmessgerät zu schaffen, mit dem auf einfache Weise viele Messungen schnell durchgeführt werden können.

Ein wesentlicher Vorteil des erfindungsgemässen Neigungsmessgerätes ist darin zu sehen, dass es für viele Anwendungsgebiete einsetzbar ist. so kann das erfindungsgemässe Neigungsmessgerät beispielsweise für die Berechnung der erforderlichen Asphaltmenge für die Neu- oder Reparaturbeschichtung von Strassen eingesetzt werden. Derartige Berechnungen sind bisher sehr aufwendig und darüber hinaus sehr ungenau, da sehr viele Parameter, wie beispielsweise in Kurven der Krümmungsradius der Strassen und der davon abhängige Überhöhungsgrad der Kurve und dergleichen, für eine exakte Berechnung zu berücksichtigen sind, die mit Hilfe des erfindungsgemässen Messgerätes allein durch ein Befahren der Strasse automatisch ermittelt werden können.

Vorteilhafte Ausgestaltungen des erfindungsgemässen Neigungsmessgerätes sind Gegenstand der Ansprüche 2 bis 6.

Eine Ausführungsform des erfindungsgemässen Messgerätes wird im folgenden anhand der Zeichnung näher beschrieben. In der Zeichnung zeigt:

Fig. 1 eine perspektivische Ansicht des erfindungsgemässen Neigungsmessgerätes in einem der möglichen Anwendungsfälle.

Fig. 2 das Blockschaltbild eines bekannten Neigungsmessgerätes und

Fig. 3 den elektrischen Schaltplan des erfindungsgemässen Messgerätes, das durch einen Entfernungsmesser ergänzt ist.

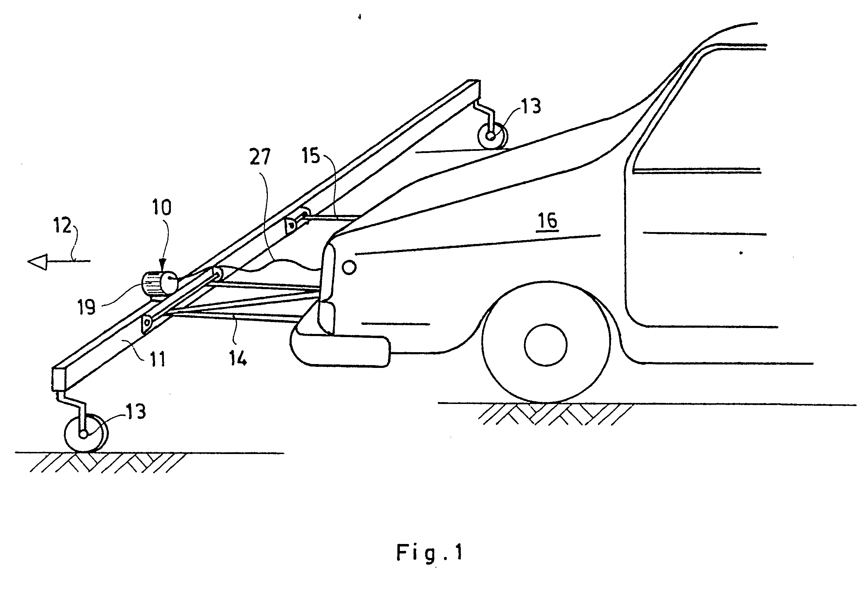

Aus Fig. 1 ist ein entsprechend der Erfindung ausgebildetes Neigungsmessgerät ersichtlich, das als Ganzes mit 10 bezeichnet ist und auf einem Balken 11 derart befestigt ist, dass die Schwingungsebene eines in Fig. 1 nicht dargestellten Pendels in Längsrichtung des Balkens 11 fällt. Der Balken 11 ist in Richtung eines Pfeiles 12 auf Stützrädern 13 verfahrbar. Die Stützräder 13 sind an den Enden des Balkens 11 angebracht und tragen denselben. Die Entfernung der Stützräder 13 voneinander beträgt im aus Fig. 1 ersichtlichen Fall ca. 5 m. Der Balken 11 ist an einem Vorderteil eines PKW 16 über Stangen 14 und 15 angelenkt.

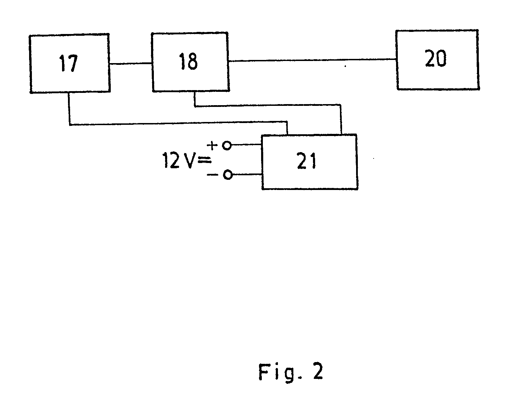

Aus Fig. 2 ist das Blockschaltbild einer möglichen Ausführungsform eines Neigungsmessers 10 ersichtlich, wobei der Neigungsmesser 10 hier aus einer elektrischen, neigungsempfindlichen Einheit 17, einem Verstärker und Umformer 18, einer Anzeigeeinheit 20 und einem an sich bekannten Spannungsstabilisierungsteil 21 besteht.

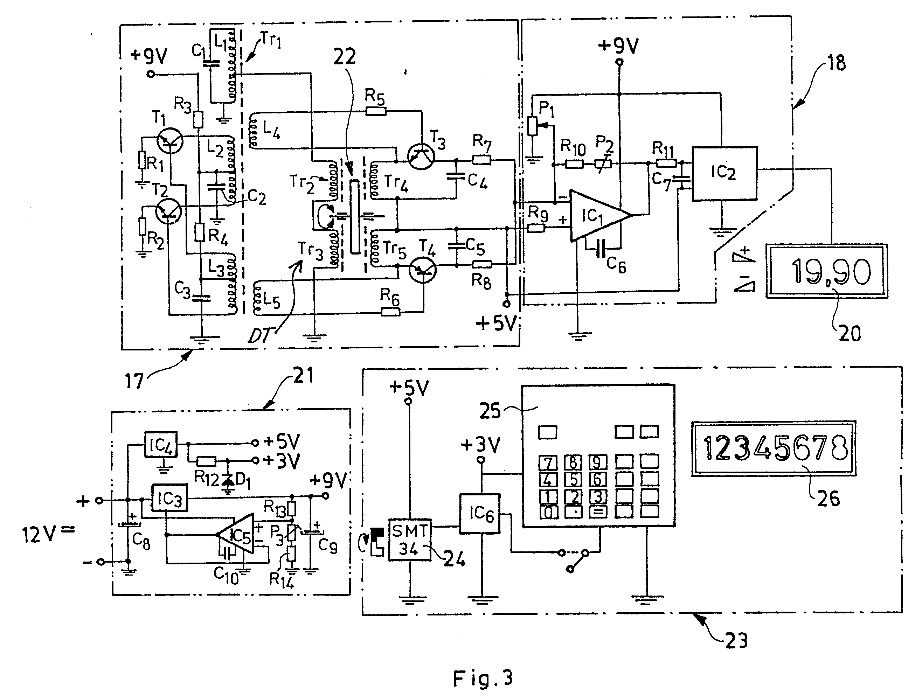

Wie aus Fig. 3 ersichtlich, besitzt die erfindungsgemässe neigungsempfindliche Einheit 17 einen Differential-Transformator DT, dessen Kern als ein in der Neigungsmessebene aufgehängtes Pendel 22 ausgebildet ist. In der Zeichnung ist das Pendel 22 nur schematisch dargestellt. Durch das Pendel 22 ist von Anfang an die vertikale Ebene bzw. die darauf senkrechte Horizontalebene definiert, so dass der Wert der gemessenen Abweichung des Pendels 22 von der horizontalen Ebene (die Neigung) gleich der Abweichung des Pendels 22 von der vertikalen Ebene ist. Die Bestimmung der Abweichung erfolgt mit dem Differential-Transformator DT, in dessen Windungen $T_{r2}$, $T_{r3}$, $T_{r4}$ und $T_{r5}$ elektrische Signale induziert werden, deren Grösse zur Abweichung der jeweiligen Lage des als Kern funktionierenden Pendels 22 von der vertikalen Ebene proportional ist. Diese elektrischen Signale steuern, nachdem sie im Verstärker und Umformer 18 verstärkt wurden, die digitale Anzeigeeinheit 20, an der in Prozent die Zahlenwerte der Neigung mit positiven oder negativen Vorzeichen abzulesen sind. Wie aus Fig. 3 ersichtlich, bilden die Transistoren $T_1$ und $T_2$ der neigungsempfindlichen Einheit 17 zusammen mit Windungen $L_2$ bzw. $L_3$ eines weiteren Transformators $T_{r1}$ einen Transverter, der ein zu der Bewegung des Pendels 22 proportionales periodisches Signal abgibt. In einer Windung $L_1$ des Transformators $T_{r1}$ wird eine Sinuswechselspannung induziert, welche die Primärwindungen $T_{r2}$ und $T_{r3}$ des Differential-Transformators DT speist. Die Kopplung zwischen den Windungen $T_{r2}$ und $T_{r4}$ bzw. $T_{r3}$ und $T_{r5}$ des Differential-Transformators DT wird von dem beweglichen Pendel 22 verändert. Die Spannung in den Sekundärwindungen $T_{r4}$ und $T_{r5}$ ändert sich linear mit der Bewegung des Pendels 22 durch die Änderung der induktiven Kopplung. Der stabile Eisenkern der Transformatoren $T_{r1}$ und DT ist durch eine gestrichelte Linie gekennzeichnet. Die am Ausgang der Sekundärwindungen $T_{r4}$ und $T_{r5}$ des Differential-Transformators DT befindlichen Transistoren $T_3$ bzw. $T_4$ funktionieren als Amplitudendetektoren, d.h. sie funktionieren nur oberhalb eines bestimmten Spannungssignalwertes. Für ihre Synchronisation sorgen die Windungen $L_4$ und $L_5$ des Transformators $T_{r1}$. Die an dem Kollektor der Transistoren $T_3$ und $T_4$ befindlichen Kondensatoren $C_4$ bzw. $C_5$ dienen zur Einstellung der Resonanz. An den Widerständen $R_7$ und $R_8$ erscheint abhängig vom Neigungswinkel, d.h. je nach dem speziellen Fall, eine Gleichspannung.

Diese Gleichspannung wird auf den Minuseingang einer Verstärkereinheit $IC_1$ des Verstärkers und Umformers 18 gegeben. Der positive Eingang der Verstärkereinheit $IC_1$ sowie der schwebende Eingang eines Analog-Digital-Wandlers (A/D-Wandlers) $IC_2$ liegen an einer konstanten 5-Volt-Spannung. Die Verstärkereinheit $IC_1$ verstärkt das Spannungssignal auf den erforderlichen Wert, der für den A/D-Wandler $IC_2$ bereits ausreichend ist. Die aus Potentiometern $P_1$ und $P_2$ und einem Widerstand $R_{10}$ des Verstärkers und Umformers 18 bestehende Einheit dient zum Einstellen der Nulllage und zum Kalibrieren.

Die Anzeigeeinheit 20 ist ein an sich bekannter flüssigkristalliner digitaler Anzeiger, an dem die gemessene Neigung in Prozent mit einer Genauigkeit von einem Zehntel-Prozent ablesbar ist. Das Messintervall liegt in diesem Fall zwischen $-19,9\%$ und $+19,9\%$, was den Erfahrungen nach ausreichend ist. Wie aus Fig. 3 ersichtlich, sind Kondensatoren mit C, Widerstände mit R und Potentiometer mit P bezeichnet.

Die Stromversorgung wird für den Fall, dass das erfindungsgemässe Neigungsmessgerät an ein Kraftfahrzeug angeschlossen ist, durch die 12-Volt-Gleichspannung des PKW 16 sichergestellt. Die inneren Netzspannungen des Neigungsmessgerätes 10 von 9 und 5 Volt sind stabilisierte Gleichspannungen. Sie werden von an sich bekannten $IC_3$-, $IC_4$- und $IC_5$-Stabilisatoren bzw. von den analogintegrierten Schaltkreisen des Netzteiles 21 geliefert (siehe Fig. 3).

Bei der aus Fig. 3 ersichtlichen Ausführungsform ist das erfindungsgemässe Neigungsmessgerät 10 mit einem Längenmesser 23 kombiniert, dessen Schaltplan ebenfalls aus Fig. 3 ersichtlich ist. Der Längenmesser 23 hat einen im Handel als «SMT-34» bekannten Signalgeber 24, welcher ein magnetgesteuerter Schmidt-Trigger ist. Das Signal des Signalgebers 24 steuert nach der Phasenumkehr einen elektronischen Schalter $IC_6$ und

lässt dadurch den konstanten Summierer eines bekannten Rechners 25 arbeiten. Bei der Messung entspricht einem bestimmten Impuls ein bestimmter Längenwert (abhängig vom Konstruktionsaufbau des Kraftwagens). Die Eingabe dieses Wertes in den Rechner 25 als Konstantwert bestimmt die Genauigkeit der Längenmessung. Im vorliegenden Fall wird der Signalgeber 24 von der Spirale des Kilometeranzeigers des Kraftwagens 16 gesteuert. Die Rechner 25 steht mit einem digitalen Anzeiger 26 in Verbindung, der die gemessene Entfernung in Meter anzeigt. Die Netzspannung von 3 und 5 Volt des Längenmessers 23 wird gleichfalls vom Netzteil 21 sichergestellt.

Der Differential-Transformator DT des Neigungsmessgerätes 10 ist im vorliegenden Fall zusammen mit dem Pendel 22 in einem Gerätegehäuse 19 untergebracht, wohingegen der elektrische Verstärker und Umformer 18, der Anzeiger 20, das Netzteil 21 und der Längenmesser 23 an der Gerätewand des Kraftfahrzeuges angebracht und mit einem Kabel 27 untereinander verbunden sind.

Der Nullabgleich des Neigungsmessgerätes 10 wird auf einer im voraus kontrollierten waagerechten Ebene vollzogen. Ein wesentlicher Vorteil des erfindungsgemässen Messgerätes 10 besteht darin, dass es keine optische Einheit enthält und dass es die mühevollen, unfallgefährlichen und zeitraubenden Tätigkeiten bei der gewöhnlichen Datenaufnahme, die auf der Strasse – in der Regel bei fliessendem Verkehr – erfolgt, überflüssig macht, d.h. es ist für die Ausführung einer grösseren Anzahl von Messungen innerhalb einer kurzen Zeit auf elektrischem Wege geeignet. Darüber hinaus benötigt man für den Betrieb des erfindungsgemässen Messgerätes 10 lediglich eine einzige Bedienungsperson, nämlich einen Fahrer des Kraftfahrzeuges. Ein weiterer Vorteil des erfindungsgemässen Messgerätes ist darin zu sehen, dass der Zahlenwert der Neigung unmittelbar auf dem Anzeiger 20 erscheint, so dass keine nachträglichen Berechnungen mehr erforderlich sind. Mit der vorgeschlagenen Lösung können unabhängig von der Witterung fortwährend Messungen vorgenommen werden.

Ein zusätzlicher Vorteil des in der Zeichnung abgebildeten Neigungsmessgerätes, das mit einem Längenmesser kombiniert ist, besteht darin, dass – z.B. auf der Autobahn mit einer Geschwindigkeit von 15–20 km/h fahrend – die Neigung des Strassenprofils mit einer Genauigkeit von 0,1% gleich an dem Anzeiger 20 zahlenmässig ablesbar ist und dass an dem Anzeiger 26 die Entfernung der geprüften Stelle von einem beliebigen Strassenprofil mit einer Metergenauigkeit ablesbar ist.

Wenn bereits eine annähernde Genauigkeit der Neigungsmessung ausreicht, kann das erfindungsgemässe Gerät 10 auch in dem Kraftfahrzeug selbst angeordnet sein. In diesem Fall ist der Balken 11 entbehrlich. Es ist auch eine derartige Ausführungsform möglich, bei der das Neigungsmessgerät 10 mit der Hand zu bewegen ist, beispielsweise in Form einer auf Rädern rollenden Zieleinrichtung. In diesem Fall muss allerdings für die Stromversorgung des Gerätes 10 ein gesonderter Akkumulator oder eine andere beliebig konzipierte Stromerzeugungseinheit vorgesehen sein.

**Patentansprüche**

1. Neigungsmessgerät, insbesondere zum Messen der Fahrbahnneigung in Längs- und Querrichtung, mit einer elektrischen, neigungsempfindlichen Einheit, (17) die ein in Richtung der Neigungsmessung frei pendelnd aufgehängtes, neigungsempfindliches Pendel (22) aufweist und an eine Anzeigeeinheit (20) angeschlossen ist, dadurch gekennzeichnet, dass die neigungsempfindliche Einheit (17) einen Differential-Transformator (DT) besitzt, dessen beweglicher Kern das neigungsempfindliche Pendel (22) bildet, dass die Primärwindungen ($T_{r2}$, $T_{r3}$) des Differential-Transformators (DT) von einer Windung ($L_1$) eines zusätzlichen Transformators ($T_{r1}$) gespeist werden und dass die Sekundärwindungen ($T_{r4}$, $T_{r5}$) des Differential-Transformators (DT) mit weiteren Windungen ($L_2$, $L_4$ bzw. $L_3$, $L_5$) des zusätzlichen Transformators ($T_{r1}$) in Verbindung stehen.

2. Neigungsmessgerät nch Anspruch 1, dadurch gekennzeichnet, dass die weiteren Windungen ($L_2$, $L_3$) des zusätzlichen Transformators ($T_{r1}$) in der neigungsempfindlichen Einheit (17) zusammen mit Transistoren ($T_1$, $T_2$) einen Transverter bilden, der die Bewegung des Pendels (22) in ein dazu proportionales, elektrisches Signal umformt.

3. Neigungsmessgerät nach Anspruch 2, dadurch gekennzeichnet, dass an den Ausgang der Sekundärwindungen ($T_{r4}$, $T_{r5}$) des Differential-Transformators (DT) angeschaltete Transistoren ($T_3$, $T_4$) als Amplitudendetektoren arbeiten, die von den weiteren Windungen ($L_4$, $L_5$) des zusätzlichen Transformators ($T_{r1}$) her synchronisiert sind.

4. Neigungsmessgerät nach einem der Ansprüche 1–3, dadurch gekennzeichnet, dass zwischen die neigungsempfindliche Einheit (17) und die Anzeigeeinheit (20) ein elektrischer Verstärker und Umformer (18) geschaltet ist.

5. Neigungsmessgerät nach einem der Ansprüche 1–4, dadurch gekennzeichnet, dass es mit einem elektrischen Längenmesser (23) kombiniert ist und dass beide mit einem spannungsstabilisierten Netzteil (21) in Verbindung stehen.

6. Neigungsmessgerät nach einem der Ansprüche 1–5, dadurch gekennzeichnet, dass es in einem Kraftfahrzeug (16) oder auf einem fahrbaren Gestell (11) angeordnet ist, wobei ein elektrischer Signalgeber (24) des Längenmessers (23) wenigstens durch eines der Fahrzeugräder steuerbar ist.

**Claims**

1. Inclination indicator, especially for measuring the road surface inclination in longitudinal and transverse direction, with an electric inclination sensitive unit (17) which has an hung inclination sensitive pendulum (22), swinging freely in the direction of the inclination indicator and which is connected to an indicating unit (20), characterized in that the inclination sensitive unit (17) comprises a differential transformer (DT), the mobile core of which forms the inclination sensitive pendulum (22), that the primary coils ($T_{r2}$, $T_{r3}$) of the differential transformer (DT) are supplied by a coil ($L_1$) of an additional transformer ($T_{r1}$) and that the secondary coils ($T_{r4}$, $T_{r5}$) of the differential transformer (DT) are in connection with other coils ($L_2$, $L_4$ respectively $L_3$, $L_5$) of the additional transformer ($T_{r1}$).

2. Inclination indicator according to claim 1, characterized in that the other coils ($L_2$, $L_3$) of the additional transformer ($T_{r1}$) in the inclination sensitive unit (17) form a transverter together with transistors ($T_1$, $T_2$), said transverter converting the motion of the pendulum (22) into a proportional electrical signal.

3. Inclination indicator according to claim 2, characterized in that transistors ($T_3$, $T_4$) connected to the exit of the secondary coils ($T_{r4}$, $T_{r5}$) of the differential transformer (DT) work as amplitude detectors which are synchronized by the other coils ($L_4$, $L_5$) of the additional transformer ($T_{r1}$).

4. Inclination indicator according to one of claims 1–3, characterized in that an electric intensifier and converter (18) is connected between the inclination sensitive unit (17) and the indicating unit (20).

5. Inclination indicator according to one of claims 1–4, characterized in that it is combined with an instrument for measuring lengths (23) and that both are in contact with the voltage stabilized power pack (21).

6. Inclination indicator according to one of the claims 1–5 characterized in that it is placed in a motor vehicle (16) or on a mobile frame (11), an electric signaler (24) of the instrument for measuring lengths (23) being controllable by one of the wheels of the vehicle.

**Revendications**

1. Clinomètre, notamment pour mesurer l'inclinaison d'une voie de roulement dans les directions longitudinale et transversale, comportant une unité électrique (17) sensible à l'inclinaison qui comprend un pendule (22), sensible à l'inclinaison, suspendu de manière à pouvoir osciller librement dans la direction de mesure, et qui est reliée à une unité d'affichage (20), caractérisé en ce que ladite unité sensible à l'inclinaison (17) comporte un transformateur différentiel (DT) dont le noyau mobile constitue ledit pendule (22) sensible à l'inclinaison, en ce que les enroulements primaires ($T_{r2}$, $T_{r3}$) dudit transformateur différentiel (DT) sont alimentés par un enroulement ($L_1$) d'un transformateur supplémentaire ($T_{r1}$), et en ce que les enroulements secondaires ($T_{r4}$, $T_{r5}$) du transformateur différentiel (DT) sont reliés à d'autres enroulements ($L_2$, $L_4$; $L_3$, $L_5$) dudit transformateur supplémentaire ($T_{r1}$).

2. Clinomètre selon la revendication 1, caractérisé en ce que lesdits autres enroulements ($L_2$, $L_3$) du transformateur supplémentaire ($T_{r1}$) forment en

combinaison avec des transistors ($T_1$, $T_2$) un transvertisseur incorporé à ladite unité sensible à l'inclinaison (17) et convertissant les mouvements du pendule (22) en un signal électrique qui leur est proportionnel.

3. Clinomètre selon la revendication 2, caractérisé en ce que les transistors ($T_3$, $T_4$) branchés sur la sortie des enroulements secondaires ($T_{r4}$, $T_{r5}$) du transformateur différentiel (DT) font fonction de détecteurs d'amplitude synchronisés à partir desdits autres enroulements ($L_4$, $L_5$) du transformateur supplémentaire ($T_{r1}$).

4. Clinomètre selon une des revendications 1 à 3, caractérisé en ce qu'un amplificateur-convertisseur électrique (18) est branché entre ladite unité sensible à l'inclinaison (17) et ladite unité d'affichage (20).

5. Clinomètre selon une des revendications 1 à 4, caractérisé en ce qu'il est combiné avec un télémètre électrique (23), et en ce que ces deux dispositifs sont reliés à un circuit d'alimentation (21) d'entrée à tension stabilisée branché sur un secteur d'alimentation en courant.

6. Clinomètre selon une des revendications 1 à 5, caractérisé en ce qu'il est disposé sur un véhicule automobile (16) ou sur un cadre de support (11) déplaçable, cependant qu'un générateur de signaux (24) électrique dudit télémètre (23) est susceptible d'être commandé par au moins une des roues dudit véhicule.

Fig.1

Fig. 2

Fig. 3